# EUROPÄISCHE PATENTANMELDUNG

(11) **EP 4 696 444 A1**
(43) Veröffentlichungstag der Anmeldung: **18.02.2026**
(21) Anmeldenummer: 24194067.5
(22) Anmeldetag: 12.08.2024
(51) Int. Cl.: B23K 20/12, B23K 31/00, B23K 31/12, B23K 37/04, B23K 101/04, B23K 101/36

(54) **VERFAHREN ZUR HERSTELLUNG VON ZUMINDEST EINEM WERKSTÜCK, HALTEVORRICHTUNG SOWIE SYSTEM UMFASSEND HALTEVORRICHTUNG UND VORRICHTUNG ZUM RÜHRREIBSCHWEISSEN**

(71) Anmelder: Nemak, S.A.B. de C.V., 66017 García, Nuevo León (MX)
(72) Erfinder: Grätzel, Michael, 98693 Ilmenau (DE)
(74) Vertreter: Cohausz & Florack

(57) **Zusammenfassung**

Die Erfindung betrifft ein Verfahren zur Herstellung von zumindest einem aus zumindest zwei Werkstückteilen (2, 4) bestehenden Werkstück (6) umfassend die folgenden Schritte: zur Verfügung stellen (108) der zumindest zwei Werkstückteile (2, 4); Bereitstellen (110) von zumindest einer Haltevorrichtung (24) zum Einspannen der zumindest zwei Werkstückteile (2, 4); Einspannen (112) der zumindest zwei Werkstückteile (2, 4) in der zumindest einen Haltevorrichtung (24); und Rührreibschweißen (114) der zumindest zwei Werkstückteile (2, 4) zu dem zumindest einen Werkstück (6). Haltevorrichtung zum Einspannen von zumindest zwei Werkstückteilen (2, 4) zum Rührreibschweißen der zumindest zwei Werkstückteile (2, 4) zu zumindest einem Werkstück (6). System zum Rührreibschweißen von zumindest zwei Werkstückteilen zu zumindest einem Werkstück umfassend: zumindest eine Haltevorrichtung (24) nach einem der Ansprüche 8 bis 13 sowie zumindest eine Vorrichtung zum Rührreibschweißen (10).

## Beschreibung

Die Erfindung betrifft ein Verfahren zur Herstellung von zumindest einem aus zumindest zwei Werkstückteilen bestehenden Werkstück umfassend die folgenden Schritte: zur Verfügung stellen der zumindest zwei Werkstückteile; Bereitstellen von zumindest einer Haltevorrichtung zum Einspannen der zumindest zwei Werkstückteile; Einspannen der zumindest zwei Werkstückteile in der zumindest einen Haltevorrichtung; und Fügen, insbesondere Rührreibschweißen, der zumindest zwei Werkstückteile zu dem zumindest einen Werkstück. Die Erfindung betrifft ebenfalls eine Haltevorrichtung zum Einspannen von zumindest zwei Werkstückteilen zum Rührreibschweißen der zumindest zwei Werkstückteile zu zumindest einem Werkstück, wobei die Haltevorrichtung insbesondere eine im Rahmen des vorgenannten Verfahrens beschriebene Haltevorrichtung ist. Ferner betrifft die Erfindung ein System zum Fügen, insbesondere zum Rührreibschweißen von zumindest zwei Werkstückteilen zu zumindest einem Werkstück umfassend zumindest eine vorgenannte Haltevorrichtung sowie zumindest eine Vorrichtung zum Rührreibschweißen.

Verfahren zum Fügen von Werkstückteilen zu zumindest einem Werkstück sind aus dem Stand der Technik bekannt. Bei einem dieser Verfahren handelt es sich um das sogenannte Rührreibschweißen (engl.: friction stir welding).

Beim Rührreibschweißen wird beispielsweise ein rotierendes Werkzeug entlang mehrerer Werkstückteile gefahren, wobei das rotierende Werkzeug die zu fügenden Werkstückteile kontaktiert. Die Rotation des Werkzeugs an den Werkstückteilen führt zu einer Temperaturerhöhung und zum Plastifizieren des Werkstoffs der Werkstückteile. Hierdurch kann eine Schweißnaht erzeugt werden, so dass die beiden Werkstückteile zu einem Werkstück gefügt werden.

Um die zu fügenden Werkstückteile in möglichst allen Raumrichtungen gegen Verdrehen, Verschieben, Verkanten und/oder Verkippen zu sichern, werden sogenannte Haltevorrichtungen verwendet, um die zu fügenden Werkstückteile einzuspannen.

Durch das auf Reibung und Wärme basierende Funktionsprinzip des Rührreibschweißens sowie den dabei wirkenden Lasten unterliegen derartige Haltevorrichtungen für das Rührreibschweißen hohen Anforderungen. Beispielsweise sollen die Haltevorrichtungen die während des Rührreibschweißprozesses entstehenden Kräfte und Momente wirksam aufnehmen und/oder die Maßhaltigkeit der zu fügenden Werkstückteile im Wesentlichen gewährleisten, indem die zu fügenden Werkstückteile möglichst exakt (zueinander) positioniert werden.

Werden die vorangegangenen Anforderungen unzureichend berücksichtigt, können unerwünschte Nacharbeiten, Einschränkungen hinsichtlich der Maßhaltigkeitsanforderungen bis hin zum Bauteilausschuss infolge von Beschädigungen auftreten.

Insofern erfolgt die Herstellung von Haltevorrichtungen für das Rührreibschweißen individuell für jeden zu fügenden Bauteiltyp und ist oft mit hohen Kosten für Materialaufwand sowie hohen Fertigungsaufwänden verbunden. Insbesondere bedingt die zunehmende Komplexität der zu fügenden Werkstückteile eine ebensolche Komplexität der Haltevorrichtungen, wodurch die Kosten für die Haltevorrichtung regelmäßig einen großen Anteil der Kosten der gesamten Rührreibschweißvorrichtung ausmachen.

Zudem werden bestehende Haltevorrichtungen vornehmlich aus Stahl hergestellt, wobei diese massiv gefertigt und nicht individuell an die jeweiligen während des Rührreibschweißens entstehenden thermischen und mechanischen Lasten angepasst sind. Hierdurch können einerseits aufwändige Nacharbeiten notwendig werden und andererseits kann ein derartiges Vorgehen zu einer Überdimensionierung der Haltevorrichtung führen, welche mit einem erhöhten Fertigungsaufwand sowie Materialaufwand einhergeht. Ebenfalls führt eine derartige massive Ausgestaltung zu einem erhöhten Platzbedarf.

Davon ausgehend hat sich daher die Aufgabe gestellt, ein Verfahren zur Herstellung von zumindest einem aus zumindest zwei Werkstückteilen bestehenden Werkstück, eine Haltevorrichtung zum Einspannen von zumindest zwei Werkstückteilen zum Rührreibschweißen der zumindest zwei Werkstückteile zu zumindest einem Werkstück, sowie ein System zum Rührreibschweißen von zumindest zwei Werkstückteilen zu zumindest einem Werkstück anzugeben, welche in kosteneffizienter Weise ein zuverlässiges Fügen, insbesondere ein zuverlässiges Fügen innerhalb einer vorgegebenen Spezifikation, der zumindest zwei Werkstückteile zu zumindest einem Werkstück ermöglichen.

Gemäß einem ersten Aspekt wird die vorgenannte Aufgabe dadurch gelöst, dass das Verfahren ferner umfasst: Herstellen der zumindest eine Haltevorrichtung mittels 3D-Druck und/oder mittels Gießen bzw. mittels eines Gussverfahrens; wobei die zumindest eine Haltevorrichtung zumindest teilweise zu den Außenkonturen der zumindest zwei Werkstückteile korrespondiert. Insbesondere ist die zumindest eine Haltevorrichtung, vorzugsweise zumindest ein Teil der zu den zu fügenden Werkstückteilen zeigenden Oberfläche, derart angepasst, dass die jeweiligen Oberflächenbereiche die während des Rührreibschweißens entstehenden Lasten zuverlässig aufnehmen können und bspw. formschlüssig an den Außenkonturen der zumindest zwei Werkstückteilen anliegen. Beispielsweise können diejenigen Bereiche, die eine erhöhte mechanische Festigkeit aufweisen sollen, da diese die zumindest zwei Werkstückteile im Wesentlichen abstützen, aus einem Material mit einer hohen Steifigkeit gefertigt sein. Ebenfalls können Bereiche mit reduzierter Steifigkeit vorgesehen werden, wodurch die Maßhaltigkeit des zumindest einen gefügten Werkstücks verbessert werden kann.

Indem die zumindest eine Halteeinrichtung mittels 3D-Druck und/oder mittels Gießen hergestellt wird, kann in produktionstechnisch günstiger Weise eine Haltevorrichtung zur Verfügung gestellt werden, welche zumindest teilweise zu den Außenkonturen der zu fügenden Werkstückteile korrespondiert und insofern ein vorteilhaftes Einspannen der zu fügenden Werkstückteile ermöglicht.

Beispielsweise können die zumindest zwei Werkstückteile in einer Aufnahme eines Grundkörpers einer Haltevorrichtung angeordnet bzw. eingespannt werden, wobei diese zusätzlich mittels Spannelementen, insbesondere Spannklammern, in der mindestens einen Aufnahme der Haltevorrichtung angeordnet bzw. eingespannt werden können.

Vorzugsweise korrespondiert die zumindest eine Haltevorrichtung insbesondere in den Bereichen oder Regionen zu den Außenkonturen der zumindest zwei (zu fügenden) Werkstückteile, welche im Wesentlichen unmittelbar auf der zumindest einen Haltevorrichtung während des Rührreibschweißens aufliegen. Vorzugsweise liegen die zumindest zwei (zu fügenden) Werkstückteile auf der zumindest eine Aufnahme der zumindest einen Haltevorrichtung auf. Insofern ist es bevorzugt, dass zumindest die zumindest eine Aufnahme zu den Außenkonturen der zumindest zwei (zu fügenden) Werkstückteile korrespondiert.

Vorzugsweise korrespondiert zumindest die zu den zumindest zwei Werkstückteilen gerichtete Seite der zumindest einen Haltevorrichtung, vorzugsweise im Wesentlichen vollständig, zu den Außenkonturen der zumindest zwei Werkstücke, insbesondere zu den Außenkonturen der zu der zumindest einen Haltevorrichtung gerichteten Seite der zumindest zwei Werkstücke.

Vorzugsweise betrifft das Verfahren insbesondere die Herstellung von zumindest einem Bauteil als Werkstück, welches im Rahmen eines Batteriepacks eines Fahrzeugs verwendet wird. Beispielsweise handelt es sich bei dem Werkstück um eine Batteriewanne, einen Batterieträger oder ein Gehäuse für eine Komponente eines Batteriepacks.

Gemäß einer bevorzugten Ausgestaltung umfasst das Verfahren ferner: Erfassen zumindest eines Teils der Außenkonturen der zumindest zwei Werkstückteile; Modellierung zumindest eines zumindest teilweisen Negativs der zumindest zwei Werkstückteile basierend auf den zumindest teilweise erfassten Außenkonturen der zumindest zwei Werkstückteile; Herstellen der zumindest einen Haltevorrichtung basierend auf dem zumindest einen zumindest teilweisen Negativ. Hierdurch kann in vorteilhafter Weise eine Haltevorrichtung im 3D-Druck und/oder mittels eines Gussverfahrens hergestellt werden, welche zumindest teilweise zu den Außenkonturen der zumindest zwei zu fügenden Werkstückteile korrespondiert.

Beispielsweise kann zumindest ein Teil der Außenkonturen der zumindest zwei Werkstückteile mittels zumindest eines Sensormittels, insbesondere beispielsweise mittels mindestens einer Kamera, erfasst werden.

Beispielsweise wird anschließend zumindest ein Negativ der zumindest zwei Werkstückteile basierend auf den erfassten Außenkonturen modelliert. Beispielsweise wird, insbesondere automatisiert, ein CAD-Modell eines Negativs der zumindest zwei zu fügenden Werkstückteile erstellt bzw. modelliert. Anschließend kann beispielsweise das CAD-Modell des Negativs dazu genutzt werden, die zumindest eine Haltevorrichtung, insbesondere die zumindest eine Aufnahme der zumindest einen Haltevorrichtung, mittels 3D-Druck oder mittels eines Gussverfahrens zu fertigen.

Im Rahmen der Modellierung können die thermischen Materialeigenschaften bei den zu erwartenden oder realen Lasten beim Rührreibschweißen berücksichtigt werden.

Dies ist vorteilhaft, da sich üblicherweise die Festigkeit des Materials oder der Materialien, aus denen die zumindest eine Haltevorrichtung gefertigt ist, bei einer Erwärmung verringert. Insofern kann unter Berücksichtigung der Fließspannung der verwendeten Materialien, die zumindest eine Haltevorrichtung entsprechend eines thermischen Lastprofil ausgelegt werden.

Eine weitere bevorzugte Ausgestaltung ist dadurch gekennzeichnet, dass nach der Modellierung des eines zumindest teilweisen Negativs der zumindest zwei Werkstückteile ein Evaluierungsschritt der Modellierung durchgeführt wird. Beispielsweise kann es sich bei einem solchen Evaluierungsschritt um eine Plausibilitätsprüfung handeln. Hierdurch können Modellierungsfehler reduziert werden.

Gemäß einer bevorzugten Ausgestaltung umfasst das Verfahren ferner: Erstellen zumindest eines Lastprofils, insbesondere mittels einer FEM-Analyse, der während des Rührreibschweißens zu erwartenden Belastungen der zumindest einen Haltevorrichtung basierend auf dem zumindest einen zumindest teilweise modellierten Negativ; und/oder Herstellen der zumindest einen Haltevorrichtung unter Berücksichtigung des zumindest einen Lastprofils. Hierdurch kann die Haltevorrichtung derart ausgelegt werden, dass diese in zuverlässiger Weise die aufkommenden Belastungen aufnimmt. Vorzugsweise wird die zumindest eine Haltevorrichtung derart hergestellt, dass neben dem zumindest einen Lastprofil noch ein Sicherheitsfaktor berücksichtigt wird.

Bei einer FEM-Analyse handelt es sich beispielsweise um ein computerisiertes Verfahren, um technische Probleme, die sich auf komplexe Systeme wie eine dreidimensionale, nichtlineare Konstruktion beziehen, zu modellieren und zu lösen. Die FEM-Analyse leitet ihren Namen von der Art und Weise ab, in der die Geometrie des betrachteten Objekts spezifiziert wird. Hierzu wird die FEM-Software mit einem gitterbasierten Modell der geometrischen Beschreibung und der zugehörigen Materialeigenschaften an insbesondere jedem Punkt im Modell versehen. In einem solchen Modell wird die Geometrie des zu analysierenden Systems durch verschiedene Größen, die als Elemente bezeichnet werden, dargestellt. Die Ecken der Elemente werden als Knoten bezeichnet. Das Model besteht regelmäßig aus einer endlichen Anzahl von Elementen, denen insbesondere Materialeigenschaften zugewiesen werden. Das Modell stellt damit beispielsweise einen physikalischen Raum dar, der vom zu analysierenden Objekt belegt wird, zusammen mit seiner direkten Umgebung. Wenn das Modell definiert ist, kann mittels der FEM-Analyse eine Simulation des physikalischen Verhaltens, bspw. während des Rührreibschweißvorgangs, durchgeführt werden.

Beispielsweise wird das Negativ der zumindest zwei Werkstückteile im Rahmen einer solchen FEM-Analyse modelliert und anschließend das physikalische Verhalten des Negativs während des Rührreibschweißvorgangs simuliert. Hierdurch können die jeweiligen mechanischen Anforderungen während des Schweißvorgangs an das zumindest eine Negativ identifiziert werden und die Haltevorrichtung derart mittels 3D-Druck und/oder mittels Gießen gefertigt werden, dass diese den mittels FEM-Analyse identifizierten mechanischen Anforderungen genügt. Beispielsweise kann in Bereichen, welche eine höhere Festigkeit erfordern, ein Material verwendet werden, welches eine höhere mechanische Festigkeit aufweist. Beispielsweise können Bereiche, welche eine höhere Festigkeit erfordern, massiv ausgestaltet sein, so dass die benötigten mechanischen Festigkeiten zur Verfügung gestellt werden können. Ebenfalls können zur Erreichung einer hohen Maßhaltigkeit Bereiche vorgesehen werden, die eine reduzierte Steifigkeit aufweisen. Beispielsweise kann durch das Fügen mittels Rührreibschweißen Bauteilverzug infolge von thermomechanischen Belastungen auftreten. Indem Bereiche mit reduzierter Steifigkeit vorgesehen werden, können eingespannte Werkstückteile in vorteilhafter Weise derart vorgehalten werden, dass auftretendem Bauteilverzug entgegengewirkt werden kann. Insbesondere können Materialen für solche Bereiche verwendet werden, die ein elastisches Materialverhalten aufweisen.

Basierend auf den Ergebnissen einer solchem FEM-Analyse und unter Berücksichtigung der Geometrie, insbesondere der Außenkonturen, der zumindest zwei Werkstückteile, kann dann in vorteilhafter Weise die zumindest eine Haltevorrichtung hergestellt werden.

Als Ergebnis einer mechanischen und/oder thermischen Modellierung ist es bevorzugt, dass für die zumindest eine Haltevorrichtung ein biometrisches Design gewählt wird. Hierdurch können Platz- und Materialeinsparungen ermöglicht werden.

Gemäß einer weiteren Ausgestaltung umfasst das Verfahren ferner: Herstellen von zumindest einem ersten Bereich der zumindest einen Haltevorrichtung sowie zumindest einem zweiten Bereich der zumindest einen Haltevorrichtung; wobei der zumindest eine erste Bereich der zumindest einen Haltevorrichtung gegenüber dem zumindest zweiten Bereich der zumindest einen Haltevorrichtung eine erhöhte Steifigkeit aufweist und/oder wobei der zumindest eine erste Bereich der zumindest einen Haltevorrichtung gegenüber dem zumindest einen zweiten Bereich der zumindest einen Haltevorrichtung eine erhöhte thermische Leitfähigkeit aufweist. Hierdurch wird es ermöglicht, die Haltevorrichtung auf die spezifischen Anforderungen, die während des Rührreibschweißens entstehen, zuzuschneiden.

Beispielsweise können Bereiche der zumindest einen Haltevorrichtung vorgesehen werden, die eine erhöhte Steifigkeit aufweisen und die primär dazu vorgesehen sind, die zumindest zwei Werkstückteile abzustützen bzw. zu halten. Diese sind in bevorzugter Weise derart ausgestaltet, dass diese zu den sie kontaktieren Außenkonturen der zumindest zwei Werkstückteile korrespondieren.

Beispielsweise können weitere Bereiche der zumindest einen Haltevorrichtung vorgesehen werden, die eine reduzierte Steifigkeit aufweisen und insofern die Maßhaltigkeit der zumindest einen Haltevorrichtung optimieren können.

Beispielsweise können zusätzliche Bereiche der zumindest einen Haltevorrichtung vorgesehen werden, die ein spezifisches elastisches Materialverhalten aufweisen, so dass die Haltevorrichtung die zumindest zwei Werkstückteile vorhält und insofern Bauteilverzug infolge von thermomechanischen Belastungen entgegengewirkt werden kann.

Beispielsweise können ebenfalls Bereiche der zumindest einen Haltevorrichtung vorgesehen werden, die bestimmte thermische Eigenschaften, beispielsweise Kühleigenschaften und/oder Kühlstrukturen, aufweisen, wodurch die thermische Belastung der zumindest zwei Werkstückteile und/oder der zumindest einen Haltevorrichtung verbessert werden kann. Insbesondere kann hierdurch auf zusätzliche Kühlelemente/Kühlstrukturen verzichtet werden, wodurch beispielsweise Kosten gespart werden können. Vorzugsweise werden die Kühlstrukturen ebenfalls im Rahmen des 3D-Drucks und/oder des Gießens direkt eingebracht.

Vorzugsweise kann die zumindest eine Haltevorrichtung Strukturen zum Wärmetauschen aufweisen, wobei diese Strukturen einen Teil eines Thermomanagements bilden können. Beispielsweise kann das Thermomanagement umfassend die Strukturen zum Wärmetauschen dazu ausgebildet sein, sowohl zu kühlen als auch zu erwärmen. Eine Kühlung kann beispielsweise dazu genutzt werden, gezielt Wärme abzuführen. Eine Erwärmung kann dazu genutzt werden, um ein stationäres Temperaturniveau einzustellen, so dass ein Warmfahren der Vorrichtung vermieden werden kann.

Beispielsweise können die Strukturen zum Wärmetauschen durch Kühl- oder Erwärmungselemente, wie beispielsweise Kühlkanäle, Heizelemente und/oder Peltierelemente gebildet werden. Insbesondere kann durch vorgenannte Strukturen zum Wärmetauschen in Verbindung mit einem Thermomanagement für einen maßlichen Ausgleich der zumindest einen Haltevorrichtung gesorgt werden. Beispielsweise dehnen sich Materialen und demnach auch die zumindest eine Haltevorrichtung bei Erwärmung aus, so dass diesem mittels eines solchen Thermomanagements entgegengewirkt werden kann und hierdurch die Maßhaltigkeit der zumindest zwei zu fügenden Werkstückteile verbessert werden kann.

Vorzugsweise umfasst das Thermomanagement eine entsprechende Sensorik zur Temperaturmessung sowie ein Steuermittel, welches die Strukturen zum Wärmetauschen entsprechend der von der Sensorik zur Verfügung gestellten Messwerte im Wesentlichen automatisiert steuert und hierdurch die zumindest eine Haltevorrichtung im Wesentlichen automatisiert kühlt und/oder erwärmt.

Eine weitere bevorzugte Ausgestaltung ist dadurch gekennzeichnet, dass der zumindest eine erste Bereich der zumindest einen Haltevorrichtung aus einem anderen Werkstoff hergestellt wird als der zumindest eine zweite Bereich der zumindest einen Haltevorrichtung. Insbesondere sind auch die anderen vorgenannten Bereiche jeweils aus verschiedenen Materialien gefertigt.

Mittels des 3D-Drucks und/oder des Gießens kann in fertigungstechnisch günstiger Weise zumindest eine Haltevorrichtung aus verschiedenen Materialien zur Verfügung gestellt werden, die vorteilhaft an die zu fügenden Werkstückteile und das Rührreibschweißverfahren angepasst ist.

Gemäß einer weiteren Ausgestaltung umfasst das Verfahren ferner: Einbringen von Strukturen zum Wärmetauschen, insbesondere Kühlstrukturen, in die zumindest eine Haltevorrichtung während und/oder nach der Herstellung der zumindest einen Haltevorrichtung; wobei die Strukturen zum Wärmetauschen, insbesondere Kühlstrukturen, vorzugsweise aus einem Metall, insbesondere aus Stahl, Kupfer, und/oder Aluminium, gefertigt werden; und/oder wobei die Strukturen zum Wärmetauschen, insbesondere Kühlstrukturen, vorzugsweise in eine Kunststoffmatrix der zumindest einen Haltevorrichtung eingebracht werden. Beispielsweise kann es sich bei Kühlstrukturen um Kühlkanäle handeln. Beispielsweise können die Strukturen zum Wärmetauschen, insbesondere Kühlstrukturen, auch durch ein spezifisches Material zur Verfügung gestellt werden, welches die während des Schweißverfahrens entstehende Wärme vorteilhaft abführt und demnach eine gute Wärmeleitfähigkeit aufweist. Hierbei kann es sich beispielsweise um ein Metall, wie beispielsweise Stahl, Kupfer und/oder Aluminium, handeln. Beispielsweise kann ein keramisches Material in einem Bereich vorgesehen werden, welcher eine geringe thermische Leitfähigkeit aufweisen soll.

Beispielsweise können die Strukturen zum Wärmetauschen, insbesondere Kühlstrukturen, nach Art eines Faser-Kunststoff-Verbunds in einer Kunststoffmatrix angeordnet werden. Dabei können beispielsweise metallische Verstärkungsfasern, wie bspw. Stahl-Fasern, vorgesehen werden. Die Kunststoffmatrix kann die Fasern umgeben und diese durch adhäsive Wechselwirkungen an die Kunststoffmatrix binden. Bei den Verstärkungsfasern kann es sich ebenfalls um Basaltfasern, Borfasern, Glasfasern, Keramikfasern, Kieselsäurefasern, Kohlenstofffasern, Quarzfasern, Aramidfasern, Kohlenstofffasern, PBO-Fasern, Polyester-Fasern, Nylon-Fasern, Polyethylen-Fasern, und/oder Polymethylmethacrylat-Fasern handeln.

Gemäß einer weiteren Ausgestaltung wird die zumindest eine Haltevorrichtung mittels 3D-Druck, insbesondere mittels 3D-Druck aus Thermoplasten, mittels einer Vergussmasse, insbesondere mittels einer Vergussmasse aus temperaturbeständigen Werkstoffen, wie bspw. Beton und/oder Epoxydharz, und/oder durch Gießen der Strukturen gefertigt. Dies hat sich insbesondere für kleinere Abmessungen der zumindest einen Haltevorrichtung als vorteilhaft herausgestellt. Bspw. liegen die Abmessungen einer derart hergestellten Haltevorrichtung vorzugsweise in einem Bereich von weniger als 500 mm x 500 mm.

Gemäß einer weiteren Ausgestaltung wird die zumindest eine Haltevorrichtung mittels Wire Arc Additive Manufacturing und/oder unter Nutzung von Vergussmasse hergestellt. Vorzugsweise kann die zumindest eine Haltevorrichtung auch durch einen 3D-Druck in Stackausführung ermöglicht werden. Hierdurch kann in fertigungstechnisch vorteilhafter Weise die zumindest eine Haltevorrichtung zur Verfügung gestellt werden. Diese Fertigungsmöglichkeiten haben sich insbesondere für größere Abmessungen der zumindest einen Haltevorrichtung als vorteilhaft herausgestellt. Beispielsweise liegen die Abmessungen einer derart hergestellten Haltevorrichtung vorzugsweise in einem Bereich von größer als 500 mm x 500 mm.

Beispielsweise wird beim Wire Arc Additive Manufacturing als Ausgangsmaterial ein Draht ("Wire"), beispielsweise aus Aluminium, durch einen Lichtbogen ("Arc") zum Schmelzen gebracht. Ein Roboter legt softwaregesteuert viele Drähte bzw. Schweißnähte derart aufeinander, bis das komplette Bauteil, insbesondere also die Haltevorrichtung, fertig gestellt ist. Hierdurch können Strukturen ermöglicht werden, die trotz einer hohen Steifigkeit ein reduziertes Gewicht aufweisen. Beispielsweise können durch das Wire Arc Additive Manufacturing zudem endkonturnahe Strukturen hergestellt werden.

Durch die Verwendung von Vergussmasse können vorteilhafter Weise komplexe Konturen abgebildet werden. Gleiches gilt in analoger Weise für Gussverfahren. Beispielsweise können insbesondere Druckgussverfahren zur Herstellung der zumindest einen Haltevorrichtung genutzt werden.

Bei einer weiteren bevorzugten Ausgestaltung wird die zumindest eine Haltevorrichtung durch zumindest einen 3D-gedruckten Sandkern zur Verfügung gestellt. Bei dem zumindest einen Sandkern kann es sich beispielsweise um einen Sandkern handeln, der üblicherweise in Gussverfahren verwendet wird. Dies ermöglicht insbesondere eine Haltevorrichtung, welche hohen thermischen Belastungen standhält und bei welcher zudem komplexe Konturen sowie Strukturen zum Wärmetauschen, insbesondere Kühlstrukturen, realisiert werden können.

Gemäß einem zweiten Aspekt wird die vorgenannte Aufgabe gelöst durch eine Haltevorrichtung zum Einspannen von zumindest zwei Werkstückteilen zum Rührreibschweißen der zumindest zwei Werkstückteile zu zumindest einem Werkstück, wobei die Haltevorrichtung insbesondere eine wie vorstehend beschriebene Haltevorrichtung ist; wobei die Haltevorrichtung insbesondere mittels 3D-Druck und/oder mittels Gießen hergestellt ist, wobei die zumindest eine Haltevorrichtung zumindest einen Grundkörper aufweist, wobei der zumindest eine Grundkörper zumindest eine Aufnahme aufweist, und wobei die zumindest eine Aufnahme zumindest teilweise zu den Außenkonturen der zumindest zwei Werkstückteile korrespondiert.

Hinsichtlich der sich mit der Haltevorrichtung ergebenden Vorteile wird im Wesentlichen auf die Ausführungen zu dem ersten Aspekt verwiesen. Beispielweise weist die Haltvorrichtung einen Grundkörper auf, in welchen die zumindest zwei Werkstückteile eingelegt werden können. Hierzu weist der Grundkörper beispielsweise zumindest eine Aufnahme, insbesondere mehrere Aufnahmen auf, wobei die Aufnahmen vorzugsweise zu den Außenkonturen der zumindest zwei Werkstückteile zumindest teilweise korrespondieren. Beispielsweise kann die zumindest eine Aufnahme Anschlags- bzw. Fixpunkte bilden, die die zu fügenden Werkstückteile in im Wesentlichen allen Raumrichtungen gegen Verdrehen, Verschieben und/oder Verkanten sichert. Vorzugsweise werden hierzu zusätzlich noch Spannelemente und/oder Spannklammern verwendet.

Beispielsweise können nach dem 3D-Druck und/oder nach dem Gießen noch Nacharbeiten durchgeführt werden.

Eine weitere Ausgestaltung ist dadurch gekennzeichnet, dass die zumindest eine Aufnahme der Haltevorrichtung zumindest einen ersten Bereich und zumindest einen zweiten Bereich aufweist, wobei der zumindest eine erste Bereich gegenüber dem zumindest einen zweiten Bereich eine erhöhte Steifigkeit aufweist; und/oder wobei der zumindest eine erste Bereich gegenüber dem zumindest einen zweiten Bereich eine erhöhte thermische Leitfähigkeit aufweist. Hierdurch kann eine Haltevorrichtung zur Verfügung gestellt werden, die an die jeweilige, während der Durchführung des Rührreibschweißens, auftretenden Anforderungen angepasst ist.

Eine weitere Ausgestaltung ist dadurch gekennzeichnet, dass Regionen der Haltevorrichtung, insbesondere der zumindest eine erste Bereich und der zumindest eine zweite Bereich, unterschiedliche Materialien umfassen. Dies ermöglicht in vorteilhafter Weise ein Vorsehen unterschiedlicher Eigenschaften der Haltevorrichtung.

Eine weitere Ausgestaltung ist dadurch gekennzeichnet, dass eine erste Region der Haltevorrichtung, insbesondere der erste Bereich einen metallischen Werkstoff, insbesondere Stahl, eine Stahllegierung, Aluminium, eine Aluminiumlegierung, Kupfer und/oder eine Kupferlegierung, umfasst; wobei eine zweite Region der Haltevorrichtung, insbesondere der zweite Bereich, Keramik umfasst. Beispielsweise kann hierdurch lokalen Wärmesenken oder Hotspots entgegengewirkt werden, da die Materialien unterschiedliche thermische Leitfähigkeiten aufweisen. Beispielsweise weisen metallische Werkstoffe, insbesondere Kupfer, eine hohe thermische Leitfähigkeit auf, wohingegen Keramiken eine eher geringe thermische Leitfähigkeit aufweisen.

Eine weitere Ausgestaltung ist dadurch gekennzeichnet, dass die Haltevorrichtung, insbesondere die zumindest eine Aufnahme der Haltevorrichtung, ferner zumindest eine Aussparung aufweist; wobei zumindest ein Erfassungsmittel, insbesondere zumindest ein Wirbelstromsensor, in der zumindest einen Aussparung eingebracht ist; wobei das zumindest eine Erfassungsmittel dazu ausgebildet ist, eine Kenngröße indikativ für die Qualität einer im Rahmen des Reibschweißens hergestellten Schweißnaht zu erfassen. Hierdurch kann eine in-Situ Prüfung der hergestellten Verbindung zwischen den zumindest zwei Werkstückteilen ermöglicht werden. Beispielsweise sind die Werkstoffe der zumindest einen Aussparung bzw. die der zumindest einen Aussparung umgebenden Region derart ausgewählt, dass diese eine derartige Qualitätsprüfung in zuverlässiger Weise ermöglichen. Beispielsweise kann als Erfassungsmittel zumindest ein Wirbelstromsensor vorgesehen werden, wobei ein solcher Sensor die Qualität an einer Nahtwurzel überprüfen kann. Bei der zumindest einen Kenngröße kann es sich jedoch auch um andere Kenngrößen handeln, die indikativ für die Qualität der hergestellten Schweißnaht sind.

Eine weitere bevorzugte Ausgestaltung ist dadurch gekennzeichnet, dass die Haltevorrichtung ferner Spannelemente, insbesondere Spannklammern, aufweist; wobei die Spannelemente vorzugsweise dazu ausgebildet sind, die zumindest zwei Werkstückteile während des Rührreibschweißens in der zumindest einen Haltevorrichtung zu halten; und wobei die Spannelemente vorzugsweise zumindest teilweise zu den Außenkonturen der zumindest zwei Werkstückteile korrespondieren. Hierdurch wird ein zuverlässiges Einspannen der zumindest zwei Werkstückteile während des Rührreibschweißens ermöglicht. Insbesondere werden die zumindest zwei Werkstückteile in im Wesentlichen allen Raumrichtungen gegen Verdrehen, Verschieben und Verkanten/Verkippen gesichert.

Gemäß einem dritten Aspekt wird die vorgenannte Aufgabe gelöst durch ein System zum Rührreibschweißen von zumindest zwei Werkstückteilen zu zumindest einem Werkstück umfassend: zumindest eine vorgenannte Haltevorrichtung sowie zumindest eine Vorrichtung zum Rührreibschweißen. Hinsichtlich der Vorteile des Systems wird auf die Beschreibung des ersten sowie des zweiten Aspekts verwiesen.

Weitere vorteilhafte beispielhafte Ausgestaltungen der Erfindung sind der folgenden detaillierten Beschreibung einiger beispielhafter Ausführungsformen der vorliegenden Erfindung, insbesondere in Verbindung mit den Figuren, zu entnehmen. Die der Anmeldung beiliegenden Figuren sollen jedoch nur dem Zwecke der Verdeutlichung, nicht aber zur Bestimmung des Schutzbereiches der Erfindung dienen. Die beiliegenden Zeichnungen sind nicht notwendigerweise maßstabsgetreu und sollen lediglich das allgemeine Konzept der Erfindung beispielhaft widerspiegeln. Insbesondere sollen Merkmale, die in den Figuren enthalten sind, keineswegs als notwendiger Bestandteil der vorliegenden Erfindung erachtet werden. Die Reihenfolge der einzelnen Schritte in den dargestellten Verfahrensübersichten gibt nicht notwendigerweise die tatsächliche (zeitliche) Reihenfolge der Schritte vor und ist lediglich beispielhaft. Nichtsdestotrotz können die Schritte zeitlich in genau der Abfolge auftreten/durchgeführt werden, wie sie in den dargestellten Verfahrensübersichten dargestellt sind. Darüber hinaus können, müssen sie aber nicht in Reaktion aufeinander durchgeführt werden.

Es zeigen:
- Fig. 1: eine Darstellung eines Ausführungsbeispiels eines Verfahrens zur Herstellung von zumindest einem aus zumindest zwei Werkstückteilen bestehenden Werkstück;
- Fig. 2a: eine schematische Ansicht eines aus zumindest zwei Werkstückteilen hergestellten Werkstücks in einer Draufsicht; und
- Fig. 2b: eine schematische Schnittansicht entlang des in Fig. 2a dargestellten Schnitts IIb.

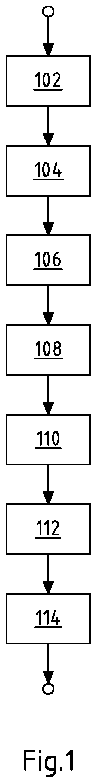

Fig. 1 zeigt eine Darstellung eines Ausführungsbeispiels eines Verfahrens zur Herstellung von zumindest einem aus zumindest zwei Werkstückteilen 2, 4 bestehenden Werkstück 6.

Zunächst können beispielsweise die Außenkonturen der zumindest zwei Werkstückteile 2 und 4 im Rahmen des Verfahrensschritts 102 erfasst werden.

Anschließend kann zumindest ein Negativ basierend auf den erfassten Außenkonturen der zumindest zwei Werkstückteile 2 und 4 im Rahmen des Verfahrensschritts 104 modelliert werden. Basierend auf einem solchen Modell zumindest eines Negativs kann dann anschließend im Rahmen des Verfahrensschritts 106 die zumindest eine Haltevorrichtung 24 mittels 3-Druck und/oder mittels Gießen hergestellt werden.

Sobald die zumindest eine Haltevorrichtung 24 hergestellt ist, können die zumindest zwei miteinander zu fügenden Werkstückteile 2, 4 im Rahmen des Verfahrensschritts 108 zur Verfügung gestellt werden und die zumindest eine Haltevorrichtung 24 im Rahmen des Verfahrensschritts 110 bereitgestellt werden. Nachfolgend können die zumindest zwei Werkstückteile 2, 4 im Rahmen des Verfahrensschritts 112 eingespannt und im Rahmen der Verfahrensschritts 114 zu zumindest einem Werkstück 6 rührreibgeschweißt werden.

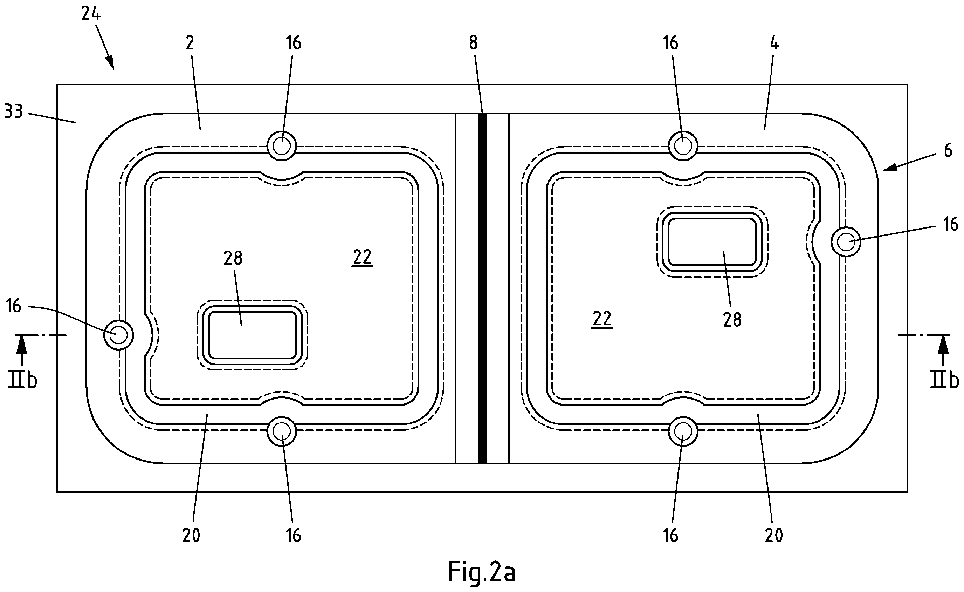

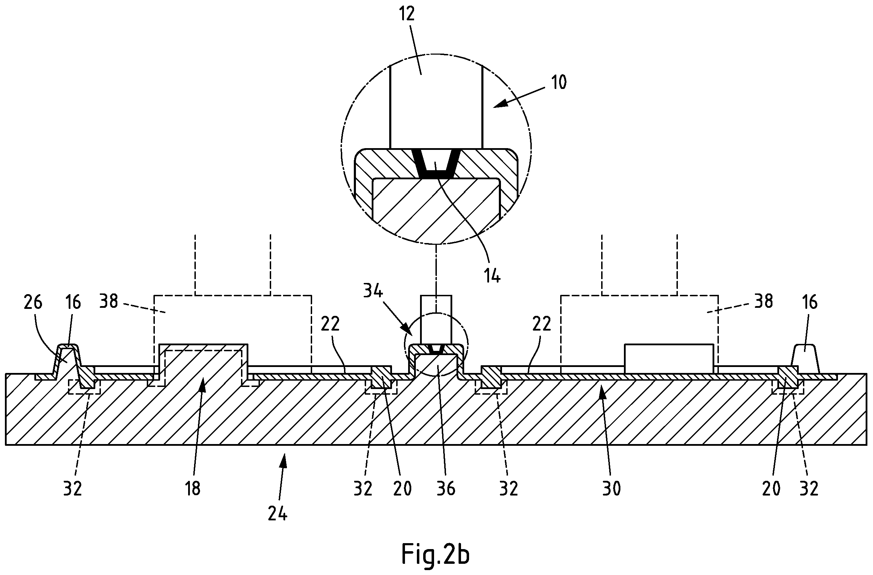

In Fig. 2a und 2b ist ein Werkstück 6, welches mittels des zuvor beschriebenen Verfahrens hergestellt wird, exemplarisch dargestellt. Bei dem dargestellten Werkstück 6 bzw. den beiden zu fügenden Werkstückteilen 2 und 4 handelt es sich beispielsweise um einen Batterieträger oder um eine Einhausung für Leistungselektronik, welches insbesondere im Rahmen der Elektromobilität, bspw. bei Elektrofahrzeugen und/oder bei Hybridfahrzeugen Anwendung findet.

Die beiden zu fügenden Werkstückteile 2 und 4 werden insbesondere mittels zumindest einer Schweißnaht 8 miteinander verbunden. Diese Schweißnaht 8 wird beispielsweise mittels eines Rührreibschweißwerkzeugs 10 erzeugt, wobei das Rührreibschweißwerkzeug 10 eine einen Grundkörper 12 mit einer Schulter und einem Schweißstift 14 umfasst. Durch die Rotation des Rührreibschweißwerkzeugs 10 können die zu fügenden Werkstückteile 2 und 4 plastifiziert und zu dem Werkstück 6 gefügt werden.

Das fertige Werkstück 6 bzw. die beiden zu fügenden Werkstückteile 2 und 4 weisen eine komplexe Form auf, die beispielsweise eine Mehrzahl an im Wesentlichen zylindrischen und hohlen Vorsprüngen 16, eine Mehrzahl an im Wesentlichen rechteckigen Ausnehmungen 18 sowie umlaufenden Vertiefungen 20 sowie 22 aufweist.

Es ist erkennbar, dass die beiden zu fügenden Werkstückteile 2 und 4 in einer Haltevorrichtung 24 eingespannt ist. Die Haltevorrichtung 24 weist dabei eine

Oberfläche auf, die im Wesentlichen zu den Außenkonturen der beiden zu fügenden Werkstückteile 2 und 4 korrespondiert. Bei den Außenkonturen der beiden zu fügenden Werkstückteile kann es sich beispielsweise um die Vorsprünge 16, die Ausnehmungen 18 sowie die umlaufenden Vertiefungen 20 sowie 22 handeln.

Beispielsweise weist die Haltevorrichtung 24 an der zu den Vorsprüngen 16 korrespondierenden Oberfläche Vorsprünge 26 auf, die im Wesentlichen den Innenraum der Vorsprünge 16 ausfüllen. Beispielsweise kann es sich bei den Vorsprüngen 26 der Haltevorrichtung um Kühlstrukturen handeln. Ebenfalls kann die Haltevorrichtungen 24 vorstehende Teile 28 aufweisen, die aus den Ausnehmungen 18 hervorstehen können.

Zudem kann die Haltevorrichtung 24 in dem Bereich der umlaufenden Vertiefungen 20 sowie 22 ebenfalls umlaufende Vertiefungen 30 und 32 aufweisen. Beispielsweise kann es sich bei der umlaufenden Vertiefung 32 um einen ersten Bereich der zumindest einen Haltevorrichtung 24 und/oder eine erste Region der zumindest einen Haltevorrichtung 24 handeln. Beispielsweise kann es sich bei der umlaufenden Vertiefung 30 um einen zweiten Bereich der zumindest einen Haltervorrichtung 24 und/oder eine zweite Region der zumindest einen Haltevorrichtung 24 handeln. Beispielsweise weist die Vertiefung 32 eine höhere Steifigkeit und/oder ein anderes Material als die Vertiefung 30 auf. Beispielsweise weist das Material der Vertiefung 32 eine gegenüber dem Material der Vertiefung 30 erhöhte thermische Leitfähigkeit auf. Beispielsweise setzt sich die Haltevorrichtung 24 aus einem Grundkörper 33 sowie einer Mehrzahl an in dem Grundkörper 33 gebildeten Aufnahmen zusammen. Die Aufnahmen werden beispielsweise gebildet durch die Vorsprünge 26, die vorstehenden Teile 28 sowie die umlaufenden Vertiefungen 30 sowie 32.

In dem Bereich der Schweißnaht 8 kann ferner eine hervorstehende Stufe 34 der beiden Werkstückteile 2 und 4 angeordnet sein, wobei die Haltevorrichtung 24 einen zu der Kontur der Stufe 34 korrespondierenden Vorsprung 36 aufweist.

Mittels einer derartigen Ausgestaltung der Haltevorrichtung 24 können die zu fügenden Werkstückteile sicher in der Haltevorrichtung 24 fixiert werden. Zur Verbesserung der Fixierung können weiterhin Spannelemente 38 vorgesehen sein, die die zwei Werkstückteile 2 und 4 während des Rührreibschweißens fixieren.

Die in dieser Spezifikation beschriebenen beispielhaften Ausführungsformen / Ausführungsbeispiele der vorliegenden Erfindung sollen auch in allen Kombinationen miteinander offenbart verstanden werden. Insbesondere soll auch die Beschreibung eines von einer Ausführungsform umfassten Merkmals - sofern nicht explizit gegenteilig erklärt - vorliegend nicht so verstanden werden, dass das Merkmal für die Funktion des Ausführungsbeispiels unerlässlich oder wesentlich ist. Die Abfolge der in dieser Spezifikation geschilderten Verfahrensschritte ist nicht zwingend, alternative Abfolgen der Verfahrensschritte sind denkbar. Alle Offenbarungen in dieser Spezifikation sind im Hinblick auf alle Kategorien Vorrichtung, Verfahren, Computerprogramm zu verstehen, sodass beispielsweise mit der Beschreibung eines Verfahrensschritt auch eine entsprechende Vorrichtung offenbart ist, die Mittel zur Ausführung und/oder Steuerung des Verfahrensschritts umfasst, und eine entsprechende Vorrichtung, die dazu eingerichtet ist, den Verfahrensschritt zu steuern und/oder auszuführen.

In den Patentansprüchen verwendete Begriffe wie "umfassen", "aufweisen", "beinhalten", "enthalten" und dergleichen schließen weitere Elemente oder Schritte nicht aus. Unter die Formulierung "zumindest teilweise" fallen sowohl der Fall "teilweise" als auch der Fall "vollständig". Die Formulierung "und/oder" soll dahingehend verstanden werden, dass sowohl die Alternative als auch die Kombination offenbart sein soll, also "A und/oder B" bedeutet "(A) oder (B) oder (A und B)". Eine Mehrzahl von Einheiten, Personen oder dergleichen bedeutet im Zusammenhang dieser Spezifikation mehrere Einheiten, Personen oder dergleichen. Die Verwendung des unbestimmten Artikels schließt eine Mehrzahl nicht aus. Eine einzelne Einrichtung kann die Funktionen mehrerer in den Patentansprüchen genannten Einheiten bzw. Einrichtungen ausführen. In den Patentansprüchen angegebene Bezugszeichen sind nicht als Beschränkungen der eingesetzten Mittel und Schritte anzusehen.

### Bezugszeichenliste

- 2: Werkstückteile
- 4: Werkstückteil
- 6: Werkstück
- 8: Schweißnaht
- 10: Rührreibschweißwerkzeug
- 12: Grundkörper des Rührreibschweißwerkzeugs
- 14: Schweißstift des Rührreibschweißwerkzeugs
- 18: Ausnehmung des Werkstückteils
- 20: umlaufende Vertiefung des Werkstückteils
- 22: umlaufende Vertiefung des Werkstückteils
- 24: Haltevorrichtung
- 26: Vorsprung der Haltevorrichtung
- 28: vorstehende Teile der Haltevorrichtung
- 30: umlaufende Vertiefung der Haltevorrichtung
- 32: umlaufende Vertiefung der Haltevorrichtung
- 33: Grundkörper der Haltevorrichtung
- 34: Stufe der Werkstückteile
- 36: Vorsprung der Haltevorrichtung
- 38: Spannelement
- 102: Erfassen
- 104: Modellieren
- 106: Herstellen
- 108: zur Verfügung stellen
- 110: Bereitstellen
- 112: Einspannen
- 114: Rührreibschweißen

## Patentansprüche

1. Verfahren zur Herstellung von zumindest einem aus zumindest zwei Werkstückteilen (2, 4) bestehenden Werkstück (6) umfassend die folgenden Schritte:
- zur Verfügung stellen (108) der zumindest zwei Werkstückteile (2, 4);
- Bereitstellen (110) von zumindest einer Haltevorrichtung (24) zum Einspannen der zumindest zwei Werkstückteile (2, 4);
- Einspannen (112) der zumindest zwei Werkstückteile (2, 4) in der zumindest einen Haltevorrichtung (24); und
- Rührreibschweißen (114) der zumindest zwei Werkstückteile (2, 4) zu dem zumindest einen Werkstück (6);
**dadurch gekennzeichnet,**
- **dass** das Verfahren ferner umfasst:
- Herstellen (106) der zumindest eine Haltevorrichtung (24) mittels 3D-Druck und/oder mittels Gießen; wobei die zumindest eine Haltevorrichtung (24) zumindest teilweise zu den Außenkonturen (16, 18, 20, 22) der zumindest zwei Werkstückteile (2, 4) korrespondiert.

2. Verfahren nach Anspruch 1, wobei das Verfahren ferner umfasst:
- Erfassen (102) zumindest eines Teils der Außenkonturen (16, 18, 20, 22) der zumindest zwei Werkstückteile (2, 4);
- Modellierung (104) zumindest eines zumindest teilweisen Negativs der zumindest zwei Werkstückteile (2, 4) basierend auf den zumindest teilweise erfassten Außenkonturen (16, 18, 20, 22) der zumindest zwei Werkstückteile (2, 4);
- Herstellen der zumindest einen Haltevorrichtung (24) basierend auf dem zumindest einen zumindest teilweisen Negativ.

3. Verfahren nach Anspruch 2, wobei das Verfahren ferner umfasst:
- Erstellen zumindest eines Lastprofils, insbesondere mittels einer FEM-Analyse, der während des Rührreibschweißens (114) zu erwartenden Belastungen der zumindest einen Haltevorrichtung (24) basierend auf dem zumindest einen zumindest teilweise modellierten Negativ; und
- Herstellen der zumindest einen Haltevorrichtung (24) unter Berücksichtigung des zumindest einen Lastprofils.

4. Verfahren nach einem der Ansprüche 1 bis 3, wobei das Verfahren ferner umfasst:
- Herstellen von zumindest einem ersten Bereich (32) der zumindest einen Haltevorrichtung (24) sowie zumindest einem zweiten Bereich (30) der zumindest einen Haltevorrichtung (24);
- wobei der zumindest eine erste Bereich (30) der zumindest einen Haltevorrichtung (24) gegenüber dem zumindest zweiten Bereich (30) der zumindest einen Haltevorrichtung (24) eine erhöhte Steifigkeit aufweist und/oder
- wobei der zumindest eine erste Bereich (32) der zumindest einen Haltevorrichtung (24) gegenüber dem zumindest einen zweiten Bereich (30) der zumindest einen Haltevorrichtung (24) eine erhöhte thermische Leitfähigkeit aufweist.

5. Verfahren nach Anspruch 4,
- wobei der zumindest eine erste Bereich (32) der zumindest einen Haltevorrichtung (24) aus einem anderen Werkstoff hergestellt wird als der zumindest eine zweite Bereich (30) der zumindest einen Haltevorrichtung (24).

6. Verfahren nach einem der Ansprüche 1 bis 5, wobei das Verfahren ferner umfasst:
- Einbringen von Strukturen zum Wärmetauschen, insbesondere Kühlstrukturen (26) in die zumindest eine Haltevorrichtung (24) während und/oder nach der Herstellung der zumindest einen Haltevorrichtung (24);
- wobei die Strukturen zum Wärmetauschen, insbesondere Kühlstrukturen (26) vorzugsweise aus einem Metall, insbesondere aus Stahl, Kupfer und/oder Aluminium, gefertigt werden; und/oder
- wobei die Strukturen zum Wärmetauschen, insbesondere Kühlstrukturen (26) vorzugsweise in eine Kunststoffmatrix der zumindest einen Haltevorrichtung (24) eingebracht werden.

7. Verfahren nach einem der Ansprüche 1 bis 6,
- wobei die zumindest eine Haltevorrichtung (24) mittels Wire Arc Additive Manufacturing und/oder unter Nutzung von Vergussmasse hergestellt wird.

8. Haltevorrichtung zum Einspannen von zumindest zwei Werkstückteilen (2, 4) zum Rührreibschweißen der zumindest zwei Werkstückteile (2, 4) zu zumindest einem Werkstück (6), wobei die Haltevorrichtung (24) insbesondere eine nach den Ansprüchen 1 bis 7 hergestellte Haltevorrichtung (24) ist;
- wobei die Haltevorrichtung (24) insbesondere mittels 3D-Druck und/oder mittels Gießen hergestellt ist,
- wobei die zumindest eine Haltevorrichtung (24) zumindest einen Grundkörper (33) aufweist,
- wobei der zumindest eine Grundkörper (33) zumindest eine Aufnahme (26, 28, 30, 32, 36) aufweist, und
- wobei die zumindest eine Aufnahme (26, 28, 30, 32, 36) zumindest teilweise zu den Außenkonturen der zumindest zwei Werkstückteile (2, 4) korrespondiert.

9. Haltevorrichtung nach Anspruch 8,
- wobei die zumindest eine Aufnahme (26, 28, 30, 32, 36) der Haltevorrichtung (24) zumindest einen ersten Bereich (32) und zumindest einen zweiten Bereich (30) aufweist,
- wobei der zumindest eine erste Bereich (32) gegenüber dem zumindest einen zweiten Bereich (30) eine erhöhte Steifigkeit aufweist; und/oder
- wobei der zumindest eine erste Bereich (32) gegenüber dem zumindest einen zweiten Bereich (30) eine erhöhte thermische Leitfähigkeit aufweist.

10. Haltevorrichtung nach Anspruch 8 oder 9,
- wobei Regionen der Haltevorrichtung (24), insbesondere der zumindest eine erste Bereich (32) und der zumindest eine zweite Bereich (30), unterschiedliche Materialien umfassen.

11. Haltevorrichtung nach Anspruch 10,
- wobei eine erste Region der Haltevorrichtung (24), insbesondere der erste Bereich (32), Kupfer und/oder eine Kupferlegierung, umfasst;
- wobei eine zweite Region der Haltevorrichtung (24), insbesondere der zweite Bereich (30) Keramik umfasst.

12. Haltevorrichtung nach einem der Ansprüche 8 bis 11,
- wobei die Haltevorrichtung (24), insbesondere die zumindest eine Aufnahme (26, 28, 30, 32, 36) der Haltevorrichtung (24), ferner zumindest eine Aussparung aufweist;
- wobei zumindest ein Erfassungsmittel, insbesondere zumindest ein Wirbelstromsensor, in der zumindest einen Aussparung eingebracht ist;
- wobei das zumindest eine Erfassungsmittel dazu ausgebildet ist, zumindest eine Kenngröße indikativ für die Qualität einer im Rahmen des Reibschweißens hergestellten Schweißnaht zu erfassen.

13. Haltevorrichtung nach einer der Ansprüche 8 bis 12,
- wobei die Haltevorrichtung (24) ferner Spannelemente (38) aufweist;
- wobei die Spannelemente (38) vorzugsweise dazu ausgebildet sind, die zumindest zwei Werkstückteile (2, 4) während des Rührreibschweißens in der zumindest einen Haltevorrichtung (24) zu halten; und
- wobei die Spannelemente (38) vorzugsweise zumindest teilweise zu den Außenkonturen der zumindest zwei Werkstückteile (2, 4) korrespondieren.

14. System zum Rührreibschweißen von zumindest zwei Werkstückteilen zu zumindest einem Werkstück umfassend:
- zumindest eine Haltevorrichtung (24) nach einem der Ansprüche 8 bis 13 sowie
- zumindest eine Vorrichtung zum Rührreibschweißen (10).

## Geänderte Patentansprüche

### Geänderte Patentansprüche gemäss Regel 137(2) EPÜ.

1. Verfahren zur Herstellung von zumindest einem aus zumindest zwei Werkstückteilen (2, 4) bestehenden Werkstück (6) umfassend die folgenden Schritte:
- zur Verfügung stellen (108) der zumindest zwei Werkstückteile (2, 4);
- Herstellen (106) zumindest einer Haltevorrichtung (24) mittels 3D-Druck und/oder mittels Gießen; wobei die zumindest eine Haltevorrichtung (24) zumindest teilweise zu den Außenkonturen (16, 18, 20, 22) der zumindest zwei Werkstückteile (2, 4) korrespondiert;
- Bereitstellen (110) der zumindest einen Haltevorrichtung (24) zum Einspannen der zumindest zwei Werkstückteile (2, 4);
- Einspannen (112) der zumindest zwei Werkstückteile (2, 4) in der zumindest einen Haltevorrichtung (24); und
- Rührreibschweißen (114) der zumindest zwei Werkstückteile (2, 4) zu dem zumindest einen Werkstück (6);
**dadurch gekennzeichnet,**
- **dass** das Verfahren ferner umfasst:
- Herstellen von zumindest einem ersten Bereich (32) der zumindest einen Haltevorrichtung (24) sowie zumindest einem zweiten Bereich (30) der zumindest einen Haltevorrichtung (24);
- wobei der zumindest eine erste Bereich (30) der zumindest einen Haltevorrichtung (24) gegenüber dem zumindest zweiten Bereich (30) der zumindest einen Haltevorrichtung (24) eine erhöhte Steifigkeit aufweist und/oder
- wobei der zumindest eine erste Bereich (32) der zumindest einen Haltevorrichtung (24) gegenüber dem zumindest einen zweiten Bereich (30) der zumindest einen Haltevorrichtung (24) eine erhöhte thermische Leitfähigkeit aufweist.

2. Verfahren nach Anspruch 1, wobei das Verfahren ferner umfasst:
- Erfassen (102) zumindest eines Teils der Außenkonturen (16, 18, 20, 22) der zumindest zwei Werkstückteile (2, 4);
- Modellierung (104) zumindest eines zumindest teilweisen Negativs der zumindest zwei Werkstückteile (2, 4) basierend auf den zumindest teilweise erfassten Außenkonturen (16, 18, 20, 22) der zumindest zwei Werkstückteile (2, 4);
- Herstellen der zumindest einen Haltevorrichtung (24) basierend auf dem zumindest einen zumindest teilweisen Negativ.

3. Verfahren nach Anspruch 2, wobei das Verfahren ferner umfasst:
- Erstellen zumindest eines Lastprofils, insbesondere mittels einer FEM-Analyse, der während des Rührreibschweißens (114) zu erwartenden Belastungen der zumindest einen Haltevorrichtung (24) basierend auf dem zumindest einen zumindest teilweise modellierten Negativ; und
- Herstellen der zumindest einen Haltevorrichtung (24) unter Berücksichtigung des zumindest einen Lastprofils.

4. Verfahren nach einem der Ansprüche 1 bis 3,
- wobei der zumindest eine erste Bereich (32) der zumindest einen Haltevorrichtung (24) aus einem anderen Werkstoff hergestellt wird als der zumindest eine zweite Bereich (30) der zumindest einen Haltevorrichtung (24).

5. Verfahren nach einem der Ansprüche 1 bis 4, wobei das Verfahren ferner umfasst:
- Einbringen von Strukturen zum Wärmetauschen, insbesondere Kühlstrukturen (26) in die zumindest eine Haltevorrichtung (24) während und/oder nach der Herstellung der zumindest einen Haltevorrichtung (24);
- wobei die Strukturen zum Wärmetauschen, insbesondere Kühlstrukturen (26) vorzugsweise aus einem Metall, insbesondere aus Stahl, Kupfer und/oder Aluminium, gefertigt werden; und/oder
- wobei die Strukturen zum Wärmetauschen, insbesondere Kühlstrukturen (26) vorzugsweise in eine Kunststoffmatrix der zumindest einen Haltevorrichtung (24) eingebracht werden.

6. Verfahren nach einem der Ansprüche 1 bis 5,
- wobei die zumindest eine Haltevorrichtung (24) mittels Wire Arc Additive Manufacturing und/oder unter Nutzung von Vergussmasse hergestellt wird.

7. Verfahren nach einem der Ansprüche 1 bis 6,
- wobei als Ergebnis für einer mathematischen und/oder thermischen Modellierung für die zumindest eine Haltevorrichtung (24) ein bionisches Design gewählt wird.

8. Haltevorrichtung zum Einspannen von zumindest zwei Werkstückteilen (2, 4) zum Rührreibschweißen der zumindest zwei Werkstückteile (2, 4) zu zumindest einem Werkstück (6), wobei die Haltevorrichtung (24) insbesondere eine nach den Ansprüchen 1 bis 7 hergestellte Haltevorrichtung (24) ist;
- wobei die Haltevorrichtung (24) insbesondere mittels 3D-Druck und/oder mittels Gießen hergestellt ist,
- wobei die zumindest eine Haltevorrichtung (24) zumindest einen Grundkörper (33) aufweist,
- wobei der zumindest eine Grundkörper (33) zumindest eine Aufnahme (26, 28, 30, 32, 36) aufweist, und
- wobei die zumindest eine Aufnahme (26, 28, 30, 32, 36) zumindest teilweise zu den Außenkonturen der zumindest zwei Werkstückteile (2, 4) korrespondiert, **dadurch gekennzeichnet,**
- **dass** die zumindest eine Aufnahme (26, 28, 30, 32, 36) der Haltevorrichtung (24) zumindest einen ersten Bereich (32) und zumindest einen zweiten Bereich (30) aufweist,
- **dass** der zumindest eine erste Bereich (32) gegenüber dem zumindest einen zweiten Bereich (30) eine erhöhte Steifigkeit aufweist; und/oder
- **dass** der zumindest eine erste Bereich (32) gegenüber dem zumindest einen zweiten Bereich (30) eine erhöhte thermische Leitfähigkeit aufweist.

9. Haltevorrichtung nach Anspruch 8,
- wobei Regionen der Haltevorrichtung (24), insbesondere der zumindest eine erste Bereich (32) und der zumindest eine zweite Bereich (30), unterschiedliche Materialien umfassen.

10. Haltevorrichtung nach Anspruch 9,
- wobei eine erste Region der Haltevorrichtung (24), insbesondere der erste Bereich (32), Kupfer und/oder eine Kupferlegierung, umfasst;
- wobei eine zweite Region der Haltevorrichtung (24), insbesondere der zweite Bereich (30) Keramik umfasst.

11. Haltevorrichtung nach einem der Ansprüche 7 bis 10,
- wobei die Haltevorrichtung (24), insbesondere die zumindest eine Aufnahme (26, 28, 30, 32, 36) der Haltevorrichtung (24), ferner zumindest eine Aussparung aufweist;
- wobei zumindest ein Erfassungsmittel, insbesondere zumindest ein Wirbelstromsensor, in der zumindest einen Aussparung eingebracht ist;
- wobei das zumindest eine Erfassungsmittel dazu ausgebildet ist, zumindest eine Kenngröße indikativ für die Qualität einer im Rahmen des Reibschweißens hergestellten Schweißnaht zu erfassen.

12. Haltevorrichtung nach einer der Ansprüche 7 bis 11,
- wobei die Haltevorrichtung (24) ferner Spannelemente (38) aufweist;
- wobei die Spannelemente (38) vorzugsweise dazu ausgebildet sind, die zumindest zwei Werkstückteile (2, 4) während des Rührreibschweißens in der zumindest einen Haltevorrichtung (24) zu halten; und
- wobei die Spannelemente (38) vorzugsweise zumindest teilweise zu den Außenkonturen der zumindest zwei Werkstückteile (2, 4) korrespondieren.

13. System zum Rührreibschweißen von zumindest zwei Werkstückteilen zu zumindest einem Werkstück umfassend:
- zumindest eine Haltevorrichtung (24) nach einem der Ansprüche 7 bis 12 sowie
- zumindest eine Vorrichtung zum Rührreibschweißen (10).
